Europäisches Patentamt

**European Patent Office**

**Office européen des brevets**

(11) Publication number: **0 135 232**
**A1**

(12) **EUROPEAN PATENT APPLICATION**

(21) Application number: **84201191.8**

(22) Date of filing: **17.08.84**

(51) Int. Cl.⁴: **F 16 C 33/42**

(30) Priority: **24.08.83 NL 8302962**

(43) Date of publication of application:
**27.03.85 Bulletin 85/13**

(84) Designated Contracting States:
**DE FR GB IT NL SE**

(71) Applicant: **SKF Industrial Trading & Development Company B.V.**
**Kelvinbaan 16 P.O. Box 50**
**NL-3430 AB Nieuwegein(NL)**

(72) Inventor: **Stijger, Dennis Willem**
**Bernhardstraat 17**
**Nieuwegein(NL)**

(74) Representative: **Merkelbach, B.**
**SKF Engineering & Research Centre B.V. Kelvinbaan 16**
**P.O. Box 50**
**NL-3430 AB Nieuwegein(NL)**

(54) **Method of making a cage for a ball bearing out of two substantially identical annular members.**

(57) The invention concerns the improvement in bearing cage mounting methods. It can be shown that by the known method of composing a cage the cage halves (1, 2) at their pockets (3) are slightly deformed due to the tools which for positioning both halves also press against the sides of said pockets. To avoid such defects which can have a negative influence on the bearing performances, it is proposed to provide one cage-half (2) with a lip-like element (7) which during composition only need to be simply pushed and therefore will slide into the groove (8) of the other cage-half (1) whereafter the attached cage-halves (1, 2) can be riveted. The use of pressing positioning tools is thus avoided. The "guiding"-element (7) further can also be used as an element for connecting both cage-halves, simply by bending it over the flat part (6) of the other cage-half (1).

fig-1

NO 31941                                    NL 83,003

Method of Making a Cage for a Ball Bearing
out of Two Substantially Identical Annular Members

The invention relates to a method of making a cage for a ball bearing out of two substantially identical annular members, each consisting of a flat ring in which, at regular intervals from each other, arcs are bowed out in axial direction, separated from each other by flat portions, which arcs have a concave surface on the inner side, the said annular members being placed one over the other with the arcs facing each other, after which, with the aid of a supporting fixture engaging the flat portions of one of the rings, the flat portions of the two rings are pressed against each other, and the rings are connected to each other at the said flat portions, so that the pairs of mutually facing arcs of the rings together form the ball receptacles of the cage of the ball bearing. Such a method is disclosed in U.S. Patent 3,820,867.

In the known method, there is a danger that when the two annular members are brought close together, one of the said members being supported at the flat portions thereof by a supporting fixture, this annular member may be displaced somewhat relative to the fixture, so that, when the two rings are pressed into contact with each other, the fixture will also press against a portion of the arcs or ball receptacles, deforming them slightly, much to the detriment of the function and life of the ball bearing.

The object of the invention is to improve the method in such a way as to eliminate the disadvantage mentioned.

This object is accomplished by the method of the invention in that the one ring, at the flat portion, is provided with portions projecting axially out of the plane of the ring, and the other ring is provided at the flat portion with cut-outs so shaped that when the rings are laid one on another, the projecting portions of the one ring will enter the cut-outs in the other ring, and when the flat parts of the rings are in contact with each other, the rings are secured undisplaceably relative to each other in the ring plane by the engagement of the projecting portions in the cut-outs.

In this way, the one annular member cannot shift relative to the fixture, because the projecting portions are held fixed by the cut-outs.

Preferably, the projecting portions consist of tabs fixed to or formed at one edge of the flat portions of the one ring, and the cut-outs consist of essentially rectangular indentations in the matching edges of the flat portions of the other ring, their width in tangential direction being substantially equal to the width of the tabs at the place where they adjoin the flat portions.

Advantageously, the tabs may have somewhat oblique side edges, tapering towards each other in the direction of the free end, so that the tabs may be more easily guided into the indentations.

After the rings have been placed one upon the other with their flat portions in contact, the tabs of the one ring may be crimped over and onto the flat portions of the other ring, whereby the rings are fastened together to form a cage, or a supplementary fastening may be provided, for example a riveted connection.

The invention relates also to a cage for a ball bearing, produced by the method and consisting of two annular members each comprising a flat ring in which, at regular intervals from each other, arcs are bowed out in axial direction, separated from each other by flat portions and having a concave surface on the inner side, which rings, with their flat portions in contact with each other, are fastened together at the said flat portions, so that the pairs of mutually facing arcs together form the ball receptacles of the cage of the ball bearing, where, according to the invention, the one ring is provided at the flat portion with features at least partially projecting in axial direction, and the other ring is provided at the flat portion with cut-outs substantially matching and accepting the axially projecting portion of the said features.

Preferably, the projecting portions comprise tabs attached to one edge of the flat portions of the one ring, and the cut-outs comprise substantially rectangular indentations in the corresponding edges of the flat portions of the other ring, their width in tangential direction being substantially equal to the width of the tabs at the point where they adjoin the flat portions. Then the tabs of the one ring may be bent over and onto the flat portions of the other ring.

It is noted that Japanese Utility Design 549-102036 discloses a ball bearing cage of the type in question, in which one of the annular members is provided at the flat portions thereof with radially projecting tabs to be bent around and onto the flat portions of the other annular member, for the purpose of fastening the annular members to each other somewhat displaceably relative to each other in circumferential direction. The object in view is thus entirely different.

The invention will be described in more detail with reference to the embodiment shown in the drawing, in which

Fig. 1 shows a pictorial view of two annular members placed one over the other for assembly of the cage, and

Fig. 2 shows a pictorial view of a portion of these rings with one pair of flat portions in contact with each other.

As shown in the figures, the cage is assembled out of two annular members 1 and 2. In the annular member 1, arcs or so-called ball recesses 3 are bent out in axial direction at regular intervals from each other, being separated from each other by flat portions 4. The ball receptacles 3 have a concave surface on the inner side. In the same way, arcs or ball recesses 5 are bent out from the other annular member 2, having a concave surface 5' on the inner side and separated from each other by the flat portions 6.

At the outer edges of the flat portions 6, tabs 7 are attached, having somewhat converging side edges 7'. In the outer edges of the flat portions 4, generally rectangular indentations 8 are provided, their width in tangential direction being approximately equal to the width of the tabs 7 at the point where they adjoin the flat portions 6.

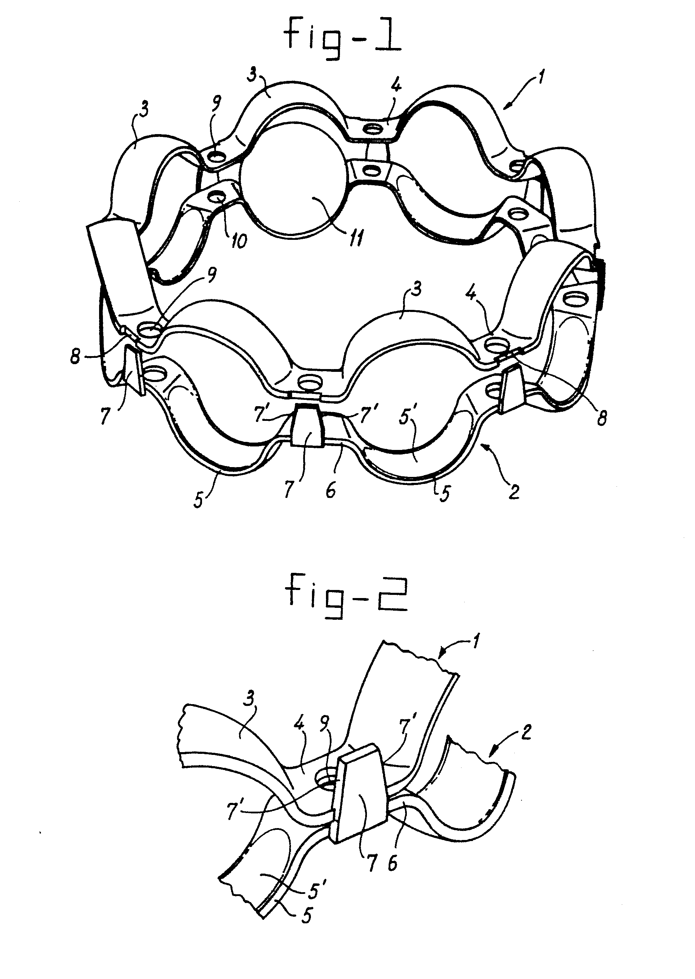

From the configuration shown in Fig. 1, the annular members 1 and 2 are brought into proximity to each other with the aid of a supporting fixture not shown, until the flat portions 4 and 6 are in contact with each other as shown in Fig. 2. In the process, the annular members 1 and 2 are guided relative to each other by insertion of the tabs 7 into the cut-outs 8, so that in the final state shown in Fig. 2, the rings 1 and 2 are held immovably fixed relative to each other in the plane of the rings by the engagement of the tabs 7 with the cut-outs 8.

Then the annular members 1 and 2 are fastened to each other at their flat portions 4 and 6, either by spot-welding or by means of rivets passed through the holes 9 and 10 in the flat portions 4 and 6 respectively. Starting from the configuration shown in Fig. 2, the projecting portions of the tabs 7 may be bent over and onto the flat portions 4, either as sole fastening means or as a supplementary fastening of the annular members 1 and 2 to each other.

In Fig. 1, one ball 11 is shown, but of course in reality there is a ball in each of the ball receptacles formed by the arcs 3 and 5.

- - -

- Claims -

1. Method of making a cage for a ball bearing out of two substantially identical annular members, each consisting of a flat ring in which, at regular intervals from each other, arcs are bowed out in axial direction, separated from each other by flat portions, which arcs have a concave surface on the inner side, the said annular members being placed one over the other with the arcs facing each other, after which, with the aid of a supporting fixture engaging the flat portions of one of the rings, the flat portions of the two rings are pressed against each other, and the rings are connected to each other at the said flat portions, so that the pairs of mutually facing arcs of the rings together form the ball receptacles of the cage of the ball bearing, characterized in that the one ring (2), at the flat portions (6), is provided with portions (7) axially projecting out of the ring plane, and the other ring (1) is provided at the flat portions (4) with cut-outs (8) so shaped that when the rings (1, 2) are laid one on another, the projecting portions (7) of the one ring slip into the cut-outs (8) of the other ring, and when the flat portions (4, 6) of the rings are in contact with each other, the rings will be undisplaceably secured relative to each other in the ring plane by the engagement of the projecting portions with the cut-outs.

2. Method according to claim 1, characterized in that the projecting portions comprise tabs (7) attached to or formed at one edge of the flat portions (6) of the one ring, and the cut-outs comprise substantially rectangular indentations (8) in the corresponding edges of the flat portions (4) of the other ring, their width in tangential direction being substantially equal to the width of the tabs (7) at the point where they adjoin the flat portions (6).

3. Method according to claim 2, characterized in that the tabs (7) have side edges (7') converging somewhat obliquely towards their free ends.

4. Method according to claim 2 ci 3, characterized in that the tabs (7) of the one ring are bent over and onto the flat portions of the other ring, after the rings have been placed one upon the other with their flat portions (4, 6) in contact.

5. Cage for a ball bearing, made by the method of claims 1 to 4, consisting of two annular members each comprising a flat ring in which, at regular intervals from each other, arcs are bowed out in axial direction, separated from each other by flat portions and having a concave surface on the inner side, which rings, in contact with each other at the flat portions, are fastened to each other at the flat portions, so that the pairs of mutually opposed arcs of the rings together form the ball receptacles of the cage for a ball bearing, characterized in that the one ring (2) is provided at the flat portions (6) with features (7) at least partly projecting in axial direction, and the other ring (1) is provided at the flat portions (4) with cut-outs (8) substantially matching and accepting the axially projecting portions of the said features (7).

6. Cage according to claim 5, characterized in that the projecting features comprise tabs (7) attached to or formed at one edge of the flat portions (6) of the one ring, and the cut-outs comprise essentially rectangular indentations (8) in the corresponding edges of the flat portions (4) of the other ring (1), their width in tangential direction being substantially equal to the width of the tabs (7) at the point where they adjoin the flat portions (6).

7. Cage according to claim 6, characterized in that the tabs (7) have side edges (7') converging somewhat towards the free ends.

8. Cage according to claim 2 or 3, characterized in that the tabs (7) of the one ring (2) are bent over and onto the flat portions (4) of the other ring.

- - -

# fig-1

# fig-2

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A- 655 130 (MALICET) <br> * Whole document * <br><br> --- | 1-8 | F 16 C 33/42 |
| X | CH-A- 249 210 (R.B.M.) <br><br> * Whole document * <br><br> ----- | 1,2,4, 5,6,8 | |

**TECHNICAL FIELDS SEARCHED (Int. Cl.4)**

F 16 C

The present search report has been drawn up for all claims

| Place of search | Date of completion of the search | Examiner |
|---|---|---|
| THE HAGUE | 09-11-1984 | ORTHLIEB CH.E. |